# EUROPEAN PATENT SPECIFICATION

(11) **EP 2 832 593 B1**
(45) Date of publication and mention of the grant of the patent: **31.05.2017**
(21) Application number: 14165556.3
(22) Date of filing: 23.04.2014
(51) Int. Cl.: B60S 1/04, B60S 1/52, B60J 1/02

(54) **Vehicle screen wiper mounting**
Fahrzeugscheibenwischermontage
Montage d'essuie-glace de véhicule

(30) Priority: 29.07.2013 GB 201313494
(43) Date of publication of application: 04.02.2015
(73) Proprietor: AGCO International GmbH, 8212 Neuhausen am Rheinfall (CH)
(72) Inventor: Schofer, Thomas, 87616 Marktoberdorf (DE)
(74) Representative: AGCO Intellectual Property Department

(56) References cited:
- EP-A1- 0 532 384
- EP-A1- 2 601 827
- DE-A1-102009 045 338
- US-A- 4 529 242

## Description

The present invention relates to windscreen wiper arrangements for vehicles and particularly, but not exclusively, to mounting arrangements for front, side or rear screen wiper systems for agricultural vehicles such as a tractors or harvesters.

A vehicle wiper arrangement is described in US Patent 5,283,926. A wiper arm device includes a wiper arm fixed at its base end to a wiper shaft which protrudes from a vehicle body. A washer nozzle provided on the wiper arm discharges washer liquid towards the windshield of the vehicle. A washer hose supplies the washer liquid to the washer nozzle and has one end protruding from a position which is near the wiper shaft and which is clear of the oscillation stroke of the wiper arm. The washer hose extends along the wiper arm so as to be connected at its other end to the washer nozzle. An arm cover is provided on the base end of the wiper arm so as to cover the end portion of the washer hose protruding from the vehicle body.

In the case of agricultural vehicles it is increasingly the case that screen sizes are becoming larger, not just to provide a more pleasant operator environment but also to improve operator vision of the area around the vehicle. With very large screens it is either the case that a long wiper arm is required together with a wiper motor capable of delivering high torque, or it is required that the wiper motor be mounted at a mid-point on the screen with the screen supporting the weight of the motor and the wiper shaft extending through an aperture in the screen. An example of this latter configuration is described in the commonly-assigned International Patent Application WO 2012/110266. A further example of a vehicle screen wiper assembly comprising a wiper motor and a screen with an aperture therethrough is described in European patent application EP 2 601 827 A1.

Producing vehicle screens in either laminated or toughened glass can be expensive, particularly where mounting holes and other apertures are required to be provided. Multiple mounting holes can increase costs further and also increase the risk of cracking if loads are transmitted through the screen (for example from a wiper motor mounting to a torque stop preventing rotation of the motor mounting).

It is an object of the present invention to at least partially mitigate such problems.

In accordance with a first aspect of the present invention there is provided a vehicle screen wiper assembly comprising a wiper motor and a screen having an aperture therethrough, characterised by first and second mounting plates each larger than the aperture and clamped together through the aperture with one on either side of the screen, the wiper motor being mounted to one of the mounting plates and having a wiper arm shaft extending through the mounting plates and aperture.

With such an arrangement, mounting of a wiper motor may be simplified, with just one hole in the screen. Furthermore, a torque stop (where fitted) may be provided on one of the mounting plates to avoid transmission of stresses through the screen glass. Indeed it is planned that all required mounting holes can be provided through the mounting plates, and the plates themselves may be configured as required to support multiple different configurations of wiper motor.

One or both mounting plates may be dished with a first portion inside the aperture and a second flange portion extending radially outwards across the surface of the screen, and the aperture is suitably circular with the mounting plate first portion being of substantially the same radius. Suitably the wiper assembly further comprises at least one washer of resiliently compressible material (such as rubber) clamped between the mounting plate and screen: additionally or alternately a portion of adhesive material may be provided between the screen and at least one of the mounting plates in the vicinity of the aperture.

The wiper assembly mounting plates suitably each have at least respective first and second openings which are close to one another with the openings of the two mounting plates being aligned when mounted to the screen, with the wiper arm shaft passing through the first opening and the assembly further comprising a washer liquid supply pipe passing through the second opening. This arrangement avoids the need for a separate screen aperture for enabling the delivery of screen wash liquid in the vicinity of the wiper blade. Preferably, the first and second openings are arranged with one vertically above the other when the mounting plates are mounted to the screen. Further openings or apertures may be provided as required, for example for the mounting of a cover body for the wiper hub.

Further features of the present invention are recited in the attached subclaims to which reference should now be made.

Embodiments of the present invention will now be described, by way of example only and with reference to the accompanying drawings in which:
Figure 1 is an exploded view of the assembly of a wiper motor and two mounting plates to a windscreen taken from the inside of a drivers cab;
Figure 2 is a view of the assembled components of Figure 1 with a wiper arm attached to the wiper motor shaft and viewed from outside of the drivers cab;
Figure 3 is a sectional elevation through the windscreen and a pair of first configuration mounting plates; and
Figure 4 is a sectional elevation through the windscreen and a pair of second configuration mounting plates with a washer liquid supply pipe attached.

In the following exemplary embodiment a windscreen wiper assembly for an agricultural vehicle such as a tractor is described. As will be readily understood, the present invention is not restricted to the front screens of such vehicles and the provision of such wiper assemblies on rear and/or side screens of a vehicle is contemplated.

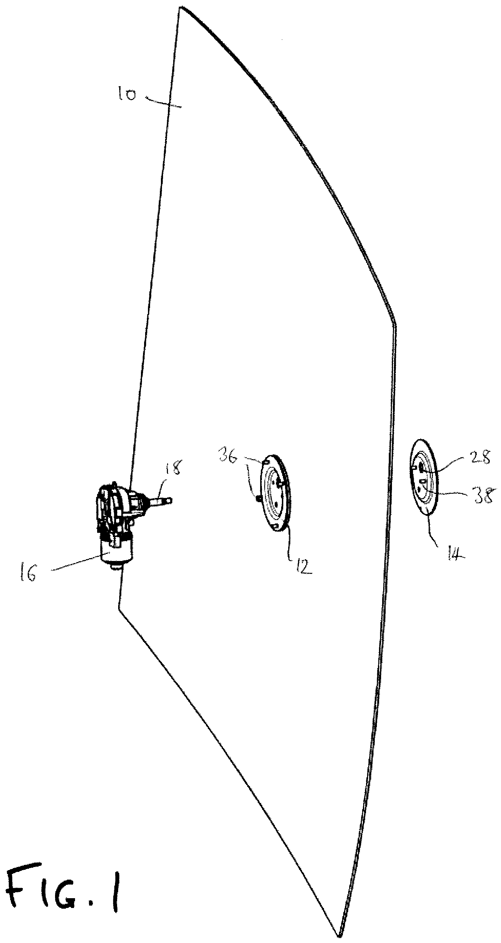

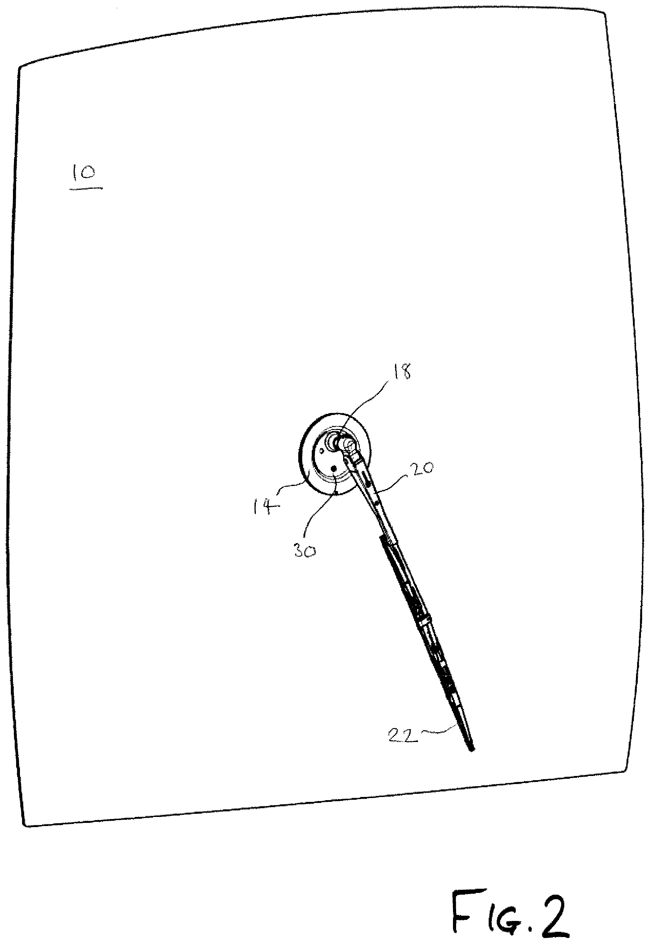

Figures 1 to 3 show a vehicle screen wiper assembly including a tractor windscreen 10 of glass or plastics material and having an aperture 10A therethrough. The assembly includes first 12 and second 14 mounting plates each larger than the aperture 10A and clamped together through the aperture with one on either side of the screen, and a wiper motor 16 mounted to one of the mounting plates 12 and having a wiper arm shaft 18 extending through the mounting plates 12, 14 and aperture 10A. On the opposite side of the screen 10, a wiper arm 20 is attached to the wiper arm shaft 18 such that a wiper blade 22 carried by the wiper arm 20 sweeps a portion of the surface of the screen 10 as the wiper arm shaft 18 is rotated about its longitudinal axis by the wiper motor 16.

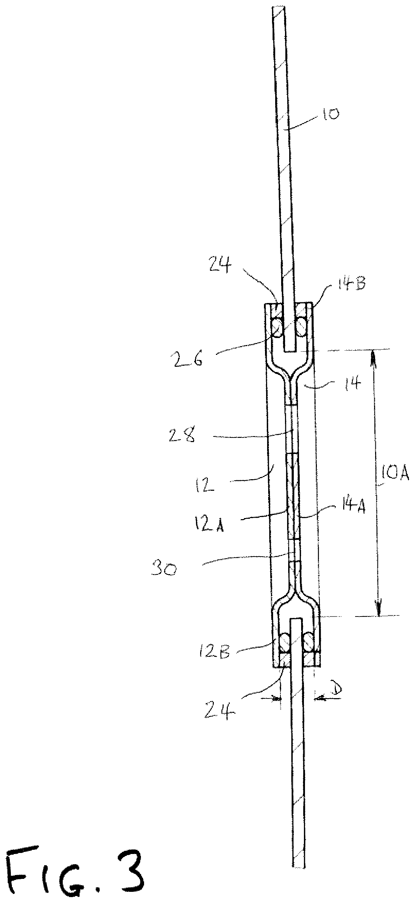

As shown particularly in Figure 3, at least one of the mounting plates 12 is dished with a first central portion 12A lying inside the screen aperture 10A (when the plate is mounted to the screen) and a second peripheral flange portion 12B extending radially outwards across the surface of the screen 10. Suitably, both plates 12, 14 are dished and are mounted to the screen 10 such that the respective first portions 12A, 14A are clamped together and there is a predetermined distance D between the flange portions 12B, 14B.

To avoid introducing potential weak spots in the windscreen 10, the aperture 10A is circular and the mounting plate first/inner portions 12A, 14A are of substantially the same radius such that the clamped (or otherwise fixed) together pair of plates 12, 14 are not capable of significant movement relative to the screen 10. In this way, the wiper arm assembly is substantially fixed in position.

At least one of the plates 12 is provided with mounting bolts or studs 36 (Fig. 1) which may be used to rigidly attach the wiper motor 16 to the plate. The other plate 14 may similarly be provided with one or more bolts or studs 38 which extend through corresponding apertures in the first plate 12 and either are simply used to clamp the two plates together (for example by simply tightening down a washer and nut combination where the threaded bolt 38 protrudes through the first plate 12) or provide an additional anchor point for the wiper motor 16.

Each of the plates 12, 14 is a metal body and is provided with a respective annular washer 24 of resiliently compressible material clamped, such as rubber, between the mounting plate 12 and screen 10, and between the mounting plate 14 and screen 10. Additionally, a portion of adhesive material 26 is provided between the screen 10 and at least one of the mounting plates 12, 14 in the vicinity of the aperture 10A. The combination of sealing washer 24 and adhesive material 26 serves to fix the mounting plates to the screen 10 without placing undue stress on the glass or other screen material, whilst at the same time sealing the aperture 10A against the ingress of contaminants (dust, fumes and liquids) to the cab.

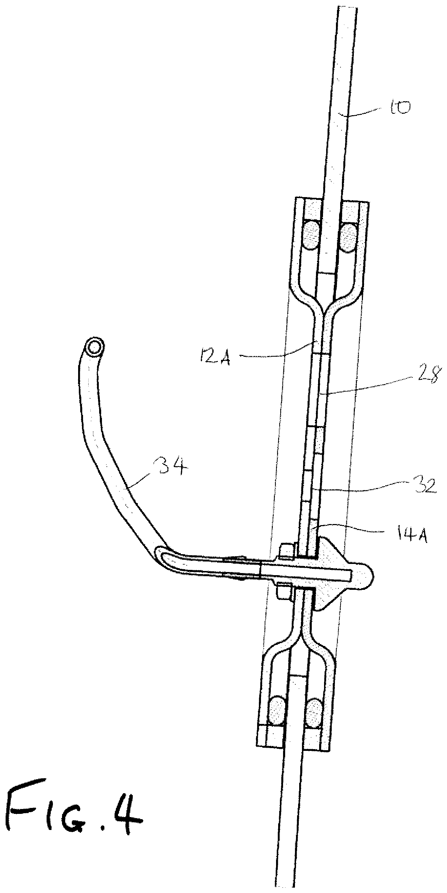

As shown in Figure 3, the mounting plates 12, 14 have respective first 28 and second 30 openings which are aligned when the plates are mounted to the screen 10, and are suitably located with one vertically located above the other. Figure 4 shows a second configuration of mounting plate having a further aperture 32 provided to receive a retaining bolt for retaining a cover (not shown) for the mounting plates and wiper hub. When the screen wiper is assembled, the wiper arm shaft 18 passes through the first opening 28, with the assembly further comprising suitable sealing means (not shown) provided to prevent the ingress of contaminants around the shaft 18.

In order to facilitate the delivery of washer fluid to the windscreen in the vicinity of the wiper blade 22, the assembly further comprises a liquid supply pipe 34 passing through the second opening.

The present invention is not limited to the embodiments shown in the attached drawings and the skilled reader will be aware of modifications and alternatives to the features shown. For example, it will be readily understood that the mounting plate 12 positioned on the screen inside of the cab may be provided with any arrangement of connecting bolts or studs as may be required for mounting of different configurations of wiper motor. The pattern and number of apertures through the mounting plates may also be varied as required by the form of wiper arm and motor.

## Claims

1. A vehicle screen wiper assembly comprising a wiper motor (16) and a screen (10) having an aperture (10A) therethrough, **characterised by** first (12) and second (14) mounting plates each larger than the aperture and clamped together through the aperture with one on either side of the screen (10), the wiper motor (16) being mounted to one of the mounting plates (12) and having a wiper arm shaft (18) extending through the mounting plates (12, 14) and aperture (10A).

2. A wiper assembly as claimed in claim 1, wherein at least one mounting plate (12) is dished with a first portion (12A) inside the aperture (10A) and a second flange portion (12B) extending radially outwards across the surface of the screen (10).

3. A wiper assembly as claimed in claim 2, wherein both plates (12, 14) are dished and are mounted to the screen (10) such that the respective first portions (12A, 14A) are clamped together and there is a predetermined distance (D) between the flange portions (12B, 14B).

4. A wiper assembly as claimed in claim 2 or claim 3, wherein the aperture (10A) is circular and the mounting plate first portion (12A, 14A) is of substantially the same radius.

5. A wiper assembly as claimed in any of claims 1 to 4, further comprising at least one washer (24) of resiliently compressible material clamped between the mounting plate (12) and screen (10).

6. A wiper assembly as claimed in claim 5, wherein the washer (24) material is rubber.

7. A wiper assembly as claimed in any preceding claim, further comprising a portion of adhesive material (26) between the screen (10) and at least one of the mounting plates (12) in the vicinity of the aperture (10A).

8. A wiper assembly as claimed in any preceding claim, wherein the mounting plates (12, 14) have at least respective first (28) and second (30) openings which are aligned when mounted to the screen (10), with the wiper arm shaft (18) passing through the first opening (28) and the assembly further comprising a washer liquid supply pipe (34) passing through the second opening (30).

9. A wiper assembly as claimed in claim 8, wherein the first (28) and second (30) openings are arranged with one vertically above the other when the mounting plates (12, 14) are mounted to the screen (10).

## Patentansprüche

1. Fahrzeugscheibenwischeranordnung mit einem Wischermotor (16) und einer Scheibe (10) mit einer sich durch diese erstreckenden Öffnung (10A), **gekennzeichnet durch** eine erste Montageplatte (12) und eine zweite Montageplatte (14), die jeweils größer als die Öffnung ausgebildet und **durch** die Öffnung miteinander verbunden sind, wobei jeweils eine der Montageplatten (12, 14) auf einer der beiden Seiten der Scheibe (10) angeordnet ist, wobei der Wischermotor (16) an einer der Montageplatten (12) montiert ist und eine Wischerarmwelle (18) aufweist, die sich **durch** die Montageplatten (12, 14) und die Öffnung (10A) erstreckt.

2. Fahrzeugscheibenwischeranordnung nach Anspruch 1, wobei mindestens eine Montageplatte (12) tellerförmig mit einem ersten Bereich (12A) in der Öffnung (10A) und einem sich radial nach außen über die Oberfläche der Scheibe (10) hinweg erstreckenden zweiten Flanschbereich (12B) ausgebildet ist.

3. Fahrzeugscheibenwischeranordnung nach Anspruch 2, wobei beide Platten (12, 14) tellerförmig ausgebildet und so an der Scheibe (10) montiert sind, dass die entsprechenden ersten Bereiche (12A, 14A) miteinander verbunden sind und sich ein vorbestimmter Abstand (D) zwischen den Flanschbereichen (12B, 14B) ergibt.

4. Fahrzeugscheibenwischeranordnung nach Anspruch 2 oder 3, wobei die Öffnung (10A) kreisförmig ist und der erste Bereich (12A, 14A) der Montageplatte im Wesentlichen denselben Radius besitzt.

5. Fahrzeugscheibenwischeranordnung nach einem der Ansprüche 1 bis 4, weiterhin mit mindestens einem Dichtungsring (24) aus einem elastisch-nachgiebigem Material, der zwischen der Montageplatte (12) und der Scheibe (10) angeordnet ist.

6. Fahrzeugscheibenwischeranordnung nach Anspruch 5, wobei das Material des Dichtungsrings (24) Gummi ist.

7. Fahrzeugscheibenwischeranordnung nach einem der vorangehenden Ansprüche, weiterhin mit einem Klebematerial (26) zwischen der Scheibe (10) und mindestens einer der Montageplatten (12) benachbart zu der Öffnung (10A).

8. Fahrzeugscheibenwischeranordnung nach einem der vorangehenden Ansprüche, wobei die Montageplatten (12, 14) mindestens eine entsprechende erste Öffnung (28) und eine zweite Öffnung (30) aufweisen, die in der an der Scheibe (10) montierten Stellung bündig ausgerichtet sind, wobei die Wischerarmwelle (18) durch die erste Öffnung (48) hindurchtritt, und wobei die Anordnung weiterhin eine Versorgungsleitung (34) für Reinigungsflüssigkeit aufweist, wobei sich die Versorgungsleitung (34) durch die zweite Öffnung (30) erstreckt.

9. Fahrzeugscheibenwischeranordnung nach Anspruch 8, wobei die erste Öffnung (28) und die zweite Öffnung (30) in vertikaler Richtung übereinander angeordnet sind, wenn die Montageplatten (12, 14) an der Scheibe (10) montiert sind.

## Revendications

1. Ensemble d'essuie-glace de véhicule comprenant un moteur d'essuie-glace (16) et un pare-brise (10) comportant une ouverture (10A) qui le traverse, **caractérisé par** des première (12) et seconde (14) plaques de montage, chacune étant plus grande que l'ouverture, et qui sont bloquées ensemble à travers l'ouverture sur chaque face du pare-brise (10), le moteur d'essuie-glace (16) étant monté sur l'une des plaques de montage (12) et comportant un arbre de bras d'essuie-glace (18) s'étendant à travers les plaques de montage (12, 14) et l'ouverture (10A).

2. Ensemble d'essuie-glace selon la revendication 1, dans lequel au moins une plaque de montage (12) est en forme de disque avec une première partie (12A) à l'intérieur de l'ouverture (10A) et une seconde partie en collerette (12B) s'étendant radialement vers l'extérieur à travers la surface du pare-brise (10).

3. Ensemble d'essuie-glace selon la revendication 2, dans lequel les deux plaques (12, 14) sont en forme de disque et sont montées sur le pare-brise (10) de telle sorte que les premières parties respectives (12A, 14A) sont bloquées ensemble et qu'une distance prédéterminée (D) est maintenue entre les parties de collerette (12B, 14B).

4. Ensemble d'essuie-glace selon la revendication 2 ou 3, dans lequel l'ouverture (10A) est circulaire et la première partie de plaque de montage (12A, 14A) est sensiblement du même rayon.

5. Ensemble d'essuie-glace selon l'une quelconque des revendications 1 à 4, comprenant en outre au moins une rondelle (24) en un matériau pouvant être compressé de manière élastique, bloquée entre la plaque de montage (12) et le pare-brise (10).

6. Ensemble d'essuie-glace selon la revendication 5, dans lequel le matériau de la rondelle (24) est du caoutchouc.

7. Ensemble d'essuie-glace selon l'une quelconque des revendications précédentes, comprenant en outre une partie de matériau adhésif (26) entre le pare-brise (10) et au moins l'une des plaques de montage (12) à proximité de l'ouverture (10A).

8. Ensemble d'essuie-glace selon l'une quelconque des revendications précédentes, dans lequel les plaques de montage (12, 14) comportent au moins des première (28) et seconde (30) ouvertures qui sont alignées lorsqu'elles sont montées sur le pare-brise (10), l'arbre de bras d'essuie-glace (18) passant à travers la première ouverture (28) et l'ensemble comprenant en outre une tuyauterie d'alimentation en liquide de lavage (34) passant à travers la seconde ouverture (30).

9. Ensemble d'essuie-glace selon la revendication 8, dans lequel les première (28) et seconde (30) ouvertures sont agencées verticalement l'une au-dessus de l'autre lorsque les plaques de montage (12, 14) sont montées sur le pare-brise (10).
